# EUROPEAN PATENT SPECIFICATION

(11) **EP 2 961 257 B1**
(45) Date of publication and mention of the grant of the patent: **09.01.2019**
(21) Application number: 13837426.9
(22) Date of filing: 09.09.2013
(51) Int. Cl.: A01D 46/26

(54) **SHAKING DEVICE FOR HARVESTING SMALL FRUIT**
SCHÜTTELVORRICHTUNG ZUM ERNTEN KLEINER FRÜCHTE
DISPOSITIF DE SECOUSSE POUR LA RÉCOLTE DE PETITS FRUITS

(30) Priority: 07.09.2012 EP 12075100
(43) Date of publication of application: 06.01.2016
(73) Proprietor: GB Progetti S.R.L., 27055 Rivanazzano Terme (PV) (IT)
(72) Inventor: BALESTRIERI, Rita, 6944 Cureglia (CH)
(74) Representative: Celestino, Marco
(86) International application number: PCT/EP2013/068648
(87) International publication number: WO 2014/040961

(56) References cited:
- EP-A1- 1 116 432
- WO-A2-2007/129207
- DE-B- 1 257 476

## Description

### Field of the invention

The present invention relates to a device for harvesting small fruit, for example olives, coffee, etc. which shake the branches of plants that hold the fruit, up to cause it to fall.

### Background of the invention

Devices are known which shake the branches of plants for harvesting small fruit, as disclosed for example in EP2374345.

Another shaking device of this type, as described in EP0427170A1, provides a hydraulic circuit that operates a plurality of rocking parts with flexible sticks to transmit them an oscillatory movement, in such a way that when they are pushed among the branches they cause the small fruit to fall down. The flexibility of the sticks and the oscillation of the parts from which the sticks extend cause the flexible sticks to assume a wavy shape, which assists the fruit to fall.

EP0427170A1 has the drawback that natural resonant frequencies higher than the second order are reached in order to obtain the wavy shape of the sticks. This leads to high kinetic energy values that can damage and break the thinner branches of the tree and damage the fruit.

Furthermore, to reach the natural resonant frequencies higher than the second order the first and second natural resonant frequencies of the sticks have to be passed, and for this reason the sticks themselves can break or be damaged.

Other shaking devices are disclosed in EP1116432 and WO2007129207, which provide substantially rigid sticks, which are arranged to operate at a frequency much lower than the first natural resonant frequency of the sticks. In order to have sufficient harvesting power, such devices must vibrate with a quite high oscillation amplitude of the support of the sticks, with high energy consumption caused by the high linear momentum of the sticks at every oscillating step. In fact, owing to the stiffness of the sticks and to the fact that they oscillate at a frequency that is much lower than the first natural resonant frequency, a desired oscillation amplitude of the sticks is obtained by an identical amplitude of the support that moves them.

In any case, the harvesting power of the existing devices like EP1116432 and WO2007129207 cannot be increased beyond certain limits, because the plants would be damaged, breaking the end branches and causing the leaves of the plants to fall together with the harvested fruit.

### Summary of the invention

It is therefore a feature of the present invention to provide a shaking device for harvesting small fruit that optimizes the exploitation of the elasticity of the sticks with respect to the prior art.

It is another feature of the present invention to provide a device for harvesting small fruit that does not damage the plants from which the small fruit has to be harvested.

It is another feature of the present invention to provide a device for harvesting small fruit that increases the battery autonomy and increases the useful working time of the equipment.

It is another feature of the present invention to provide a device for harvesting small fruit with improved mechanical efficiency.

These and other objects are achieved by a shaking device for harvesting small fruit, comprising:
- a holding rod;
- at least one support body movably connected to the holding rod;
- a plurality of sticks connected to the support body;
   - an actuation means for causing an alternated movement to the or each support body with respect to the holding rod, the alternated movement causing a corresponding alternated movement to the sticks, and the alternated movement having a predetermined frequency and a predetermined amplitude;
**characterised in that**
the sticks are arranged as resonating members having a predetermined first natural resonant frequency;
**and** the actuation means is configured to cause the alternated movement to have a frequency set between 45% and 98% of the first natural resonant frequency of the flexible sticks, in order to cause the flexible sticks to oscillate at an enhanced amplitude that is at least 1,5 to 10 times larger than the amplitude of the oscillation received from the actuation means.

This way, a much lower linear momentum of the support causes an enhanced amplitude of oscillation of the sticks which is similar or even higher to that of the sticks of the cited prior art harvesting devices. In fact, the resilient flexural component of the sticks amplifies the mechanical movement that is imposed to the ends of the sticks at least 1,5 to 10 times. This way, the sticks substantially whip the branches without breaking the ends of the branches and causing more effectively the fruit to fall without that the leaves massively fall.

In fact, on the one hand the sticks vibrate with the enhanced amplitude, and on the other hand they adapt to the space available within the branches, transmitting to them the vibrations that are enhanced owing to their arrangement as resonant members and the frequency which is set not far from the first natural frequency.

In particular, the lower amplitude of movement of the support, and therefore the lower required linear or angular momentum reduces the kinetic energy transferred to the plants, preventing them from being damaged.

Moreover, owing to the lower momentum of the moving parts, the energy consumption is reduced, therefore, using for example an electric motor, battery autonomy is increased.

For example, the alternated movement can be provided at a frequency set between 60% and **98**%, in particular 75% and 98%, of the first natural resonant frequency of the flexible sticks. In these preferred ranges, the enhanced oscillation of the sticks is higher, further enhancing the above indicated effects.

In a preferred exemplary embodiment of the invention, the sticks can be arranged as resonating members having a predetermined first natural resonant frequency by making at least a portion of the sticks of a flexible material having a predetermined elasticity modulus and a cross section with a predetermined moment of inertia, such that by setting the predetermined frequency of the alternated movement between 500 and 2000 cycles per minute, preferably between 800 and 1200 cycles per minute, or alternatively between 1000 and 1600 cycles per minute, they vibrate with the enhanced amplitude. In this case, a fruit harvester with tailored harvesting capacity can be made according to specific types of plants and fruit.

Advantageously, the actuation means comprises a frequency adjustment means configured in such a way that by adjusting the frequency the enhanced amplitude of the oscillations of the sticks is adjusted and consequently the harvesting power of the shaking device is adjusted.

In this way, the harvesting power can be chosen responsive to the ripeness of the fruit, to the strength of the leaves and of the branches, or to different parts of the plants, in order to find the maximum effectiveness and the minimum damages to the plant and the fruit. Moreover, the increase of frequency of movement with respect to the first natural resonant frequency of the sticks determines a very relevant increase of harvesting power with respect to the power consumption of the harvester. In other words, the increase of energy consumption is less than proportional than the increase of the harvesting power.

This way, it is possible to adjust the amplitude of the oscillations at the free ends of the sticks, by suitably adjusting the frequency of the actuation means.

In all of these cases, the sticks can be arranged as resonating members, in order to enhance the vibration amplitude at the frequencies as defined above.

In possible embodiments, the sticks have a cross section selected from the group consisting of:
substantially circular cross section
substantially rectangular cross section
substantially rectangular cross section with thickness lower in a support oscillation plane and thickness higher a plane orthogonal to the support oscillation plane.
In the latter case, the sticks enhance the vibration amplitude as defined above only in the support oscillation plane, and are substantially not flexible in a plane orthogonal to the support oscillation plane.

The flexible sticks or flexible portions of sticks can be made of a high resilience and high-toughness material, in particular selected from the group consisting of: glass fibres, carbon fibres, steel, polymeric material, in such a way that their flexibility enhances the vibration amplitude as defined above.

The sticks can comprise a core made of a first material and an external lining arranged about the core made of a second material, preferably the first material has a higher elasticity modulus than the second material, in order form a resistant and contemporaneously flexible stick that enhance the vibration amplitude as defined above.

Advantageously the sticks can have a variable cross section, in particular the cross section is larger at a root region of the stick and is smaller at the free end. In this way the flexibility can be tailored in order to be maximum at the sticks ends, maintaining higher stiffness at the roots.

In a possible embodiment the sticks have a hollow cross section, with a thickness that enhances the flexibility in order to enhance the vibration amplitude as defined above.

In a first embodiment, a single support body is provided movably mounted to the holding rod.

In a second embodiment, two support bodies are provided movably mounted to the holding rod and oscillating in a same direction or in opposite directions, in a same plane or in two different parallel planes.

In a further embodiment, the support body comprises a movable part and a fixed part, to which the sticks are fixed, the movable part engaging the sticks at a distance from the fixed part in order to cause the sticks to oscillate.

In this embodiment, in a possible working configuration, the fixed part can be bridge-shaped and the movable part can be arranged between the fixed part and the rod. Also sticks have a portion extending between the fixed part and the rod, in such a way that the movable part engages such extending portion and cause the whole sticks to vibrate.

Advantageously, the support comprises a means for transmitting a circular oscillation to the sticks, in particular the circular oscillation is a conical movement, and wherein preferably the sticks have a substantially rectangular cross section.

In an exemplary embodiment of the invention, the support body is pivotally constrained to the holding rod and oscillates about an axis.

In another exemplary embodiment, the support body is slidingly constrained to the holding rod.

Advantageously, the actuation means exploits a continuous rotation transmitted by a motor to the device.

In particular, the actuation means can be of electric type.

As an alternative, the actuation means can be of pneumatic or hydraulic type.

### Brief description of the drawings

Further characteristic and/or advantages of the shaking device for harvesting small fruit according to the present invention will be made clearer with the following description of an exemplary embodiment thereof, exemplifying but not limiting, with reference to the attached drawings in which:
- Fig. 1 shows a diagrammatic perspective view of a shaking device for harvesting small fruit according to an embodiment of the invention, provided with two adjacent translationally movable supports for flexible shaking sticks;
- Fig. 2 shows a diagrammatic perspective view of a shaking device for harvesting small fruit according to another embodiment of the invention, provided with two parallel, translationally movable, supports for flexible shaking sticks;
- Fig. 3 shows a diagrammatic perspective view of a shaking device for harvesting small fruit according to a further embodiment of the invention, provided with a **rotationally movable** support for flexible shaking sticks;
- Fig. 4 shows a diagrammatic perspective view of a shaking device for harvesting small fruit according to still another further embodiment of the invention, provided with rotationally movable support for flexible shaking sticks;
- Fig. 5 show a top plan view of the device of Fig. 4;
- Fig. 6 and 7 show a diagrammatical front view and a diagrammatical perspective view, showing possible constructions of the sticks;
- Fig. 8 is a front view of a shaking device according to an embodiment of the invention similar to that of figure 1, showing the deformation of the sticks vibrating at a frequency proximate to the first natural frequency thereof;
- Fig. 9 is a front view of a shaking device according to another embodiment of the invention similar to that of figure 2, showing the translational movement of the sticks and the deformation of the sticks vibrating at a frequency proximate to the first natural frequency thereof;
- Fig. 10 is a front view of a shaking device according to a further embodiment of the invention showing the rotational movement of the supports of the sticks and the deformation of the sticks vibrating at a frequency proximate to the first natural frequency thereof;
- Fig. 11 is a front view of a shaking device according to still another embodiment of the invention showing the rotational movement of the supports of the sticks showing the deformation of the sticks vibrating at a frequency proximate to the first natural frequency thereof;
- Fig. 12 is a front view of a shaking device according to still a further embodiment of the invention showing the rotational movement of the supports of the sticks showing the deformation of the sticks vibrating at a frequency proximate to the first natural frequency thereof;
- Fig. 13 is a perspective view of a shaking device according to an embodiment of the invention similar to that of figure 3 and showing the rotational movement of the sticks according to a conical motion, showing the deformation of the sticks vibrating at a frequency proximate to the first natural frequency thereof;
- Fig. 14 and 15 are a perspective view and a top plan view, respectively of a shaking device according to another embodiment of the invention similar to that of figure 4 and 5 showing the rotational movement of the sticks support;
- Fig. 16 show schematically the movement of a stick, showing the deformation of the flexible stick vibrating at a frequency proximate to the first natural frequency thereof, and the difference of its oscillation amplitude with respect to a stiff vibrating stick, i.e. a stick vibrating at a frequency much lower than the first natural frequency thereof;
- Fig. 17 is a diagrammatic perspective view of a shaking device according to still a further embodiment of the invention showing the support of the sticks rigidly connected to the holding rod and the sticks are linked to the moving mean by a pivotal connection.
- Fig. 18 is a diagrammatic perspective view of a shaking device according to still a further embodiment of the invention showing a further innovative embodiment in which the lower ends of the rods are not connected rigidly to the support but pivotally.
- Fig. 19 is a diagrammatic perspective view of a shaking device according to still a further embodiment of the invention showing a further innovative embodiment in which the lower ends of the rods are pivotally linked support.
- Fig. 20 shows a shaking device comprising an actuation means arranged to be actuated by an available drive shaft co-axial to the holding rod of the device;
- Figures 21 and 22 show two shaking devices comprising an electric and pneumatic or hydraulic actuation means, respectively.
- Fig. 23-25 show diagrammatic perspective views of a shaking device according to still further embodiments that do not form part of the invention in which the sticks are partly rigid and each stick is connected to the support body trough an elastic element that allows the sticks to oscillate with a predetermined frequency and a enhanced amplitude;
- Fig. 23A show schematically the movement of a stick of Fig. 23, showing the deformation of the elastic element connecting the stick with the support body.

### Description of preferred exemplary embodiments

With reference to the attached drawings, a device for harvesting small fruit provides sticks that are caused to oscillate by an actuating system with an alternated movement set preferably between 500 to 2000, most preferably between 800 and 1200 cycles per minute, or alternatively between 1000 and 1600 cycles per minute.

According to the invention, the sticks, are caused to oscillate at a frequency proximate to their first natural frequency, preferably between 45% and 98%, most preferably between 60% and 98%, and even between 75% and 98%, in such a way that they enhance their oscillation amplitude 1,5 to 10 times than the oscillation amplitude that generates it.

This shaking frequency and the stick flexibility, which are arranged as resonating sticks, is optimal for causing small fruit, such as olives, coffee, etc, to fall from the plants without causing break of the branches, fall of leaves or damage to the fruit.

The term "flexible", in the present description, has to be intended as clarified below.

According to the invention the flexible sticks are built in order to have a first natural vibration frequency much lower than the flexible sticks of prior art. In particular, their first natural vibration frequency is selected in order to be not much higher than the normal shaking frequency of the existing shaking devices.

In other words, the flexible sticks are made of a flexible material having a predetermined elasticity modulus and have a cross section with a predetermined moment of inertia such that when they are subject to such an alternated movement set as indicated above, they vibrate with said frequency and achieve the enhanced stick oscillation amplitude.

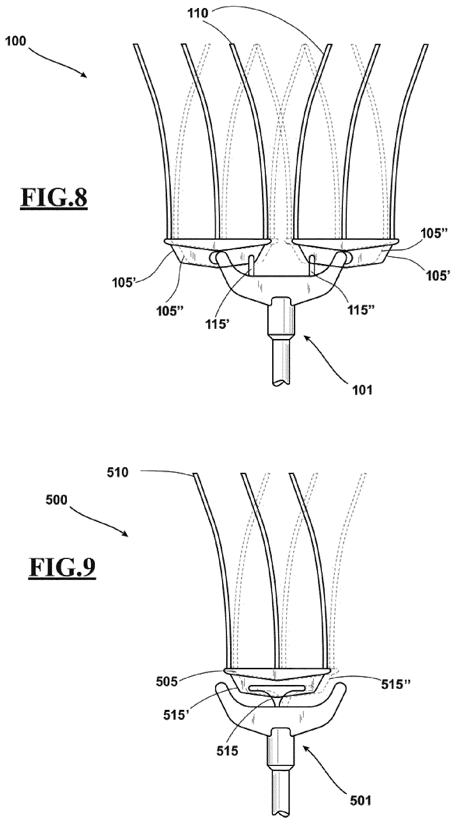

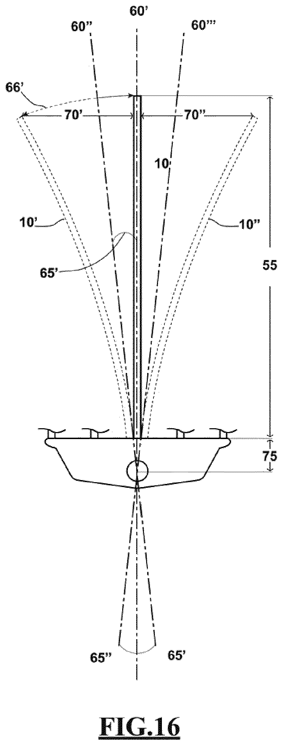

Therefore, the rigid vibration amplitude of the support body, or other moving means, turns into an amplified oscillation as shown in figures 8-13 and 16-19, and is increased up to 2-3 times or more generally 1,5 to 10 times, with respect to the rigid oscillation that causes their movement, as shown in figure 16, without reaching dangerous energy levels that could cause the undesired effects of breaking the branches, damaging the fruit, detaching the leaves, and even damaging the flexible sticks.

A relevant energy saving is also obtained. In fact, for reaching predetermined shaking amplitude of the flexible sticks, much less energy is required with respect to prior art shaking devices which use substantially stiff sticks.

For example, if a desired excursion of a tip of a flexible stick is 6 cm for achieving an optimal harvesting effect, according to the invention the support has to oscillate with an excursion which would correspond to a movement of only 2 cm. The further 4 cm excursion are provided by the amplification of the flexible stick when they vibrate at a frequency that is between 45% and 98% of the first natural resonant frequency, or within one of the other preferred subranges.

Some possible exemplary embodiments of fruit harvester that can implement the present invention are now described in detail.

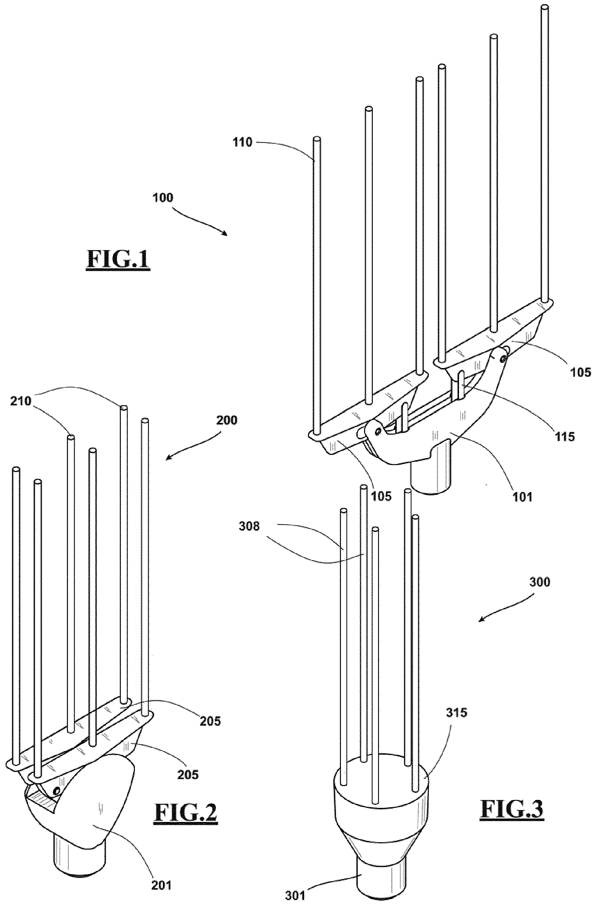

With reference to Fig. 1, a first exemplary embodiment of a shaking device 100 for harvesting small fruit provides two support bodies 105 aligned with respect to each other, which are movably connected to a holding rod 101 via a fixed intermediate support. Shaking device 100 also comprises a plurality of flexible sticks 110 each having one end connected to one of two support bodies 105 and each having a natural resonant frequency as described above.

Fig. 2 shows a diagrammatic perspective view of a shaking device 200 according to another exemplary embodiment of the invention. Shaking device 200 comprises a holding rod 201, two parallel support bodies 205 that are movably connected to holding rod 201 via a fixed intermediate support in order to oscillate in opposed direction in two planes parallel to each other. Shaking device 200 also comprises a plurality of flexible sticks 210 each having one end connected to support body 205 and each having a natural resonant frequency as described above.

Fig. 3 shows a diagrammatic perspective view of a shaking device 300 according to a further exemplary embodiment of the invention. Shaking device 300 comprises a holding rod 301 and one support body 315 that is movably connected to the holding rod 301. The support body 315 can oscillate with a conical movement. Shaking device 300 also comprises a plurality of flexible sticks 308 each having one end connected to support body 315 and each having a natural resonant frequency as described above.

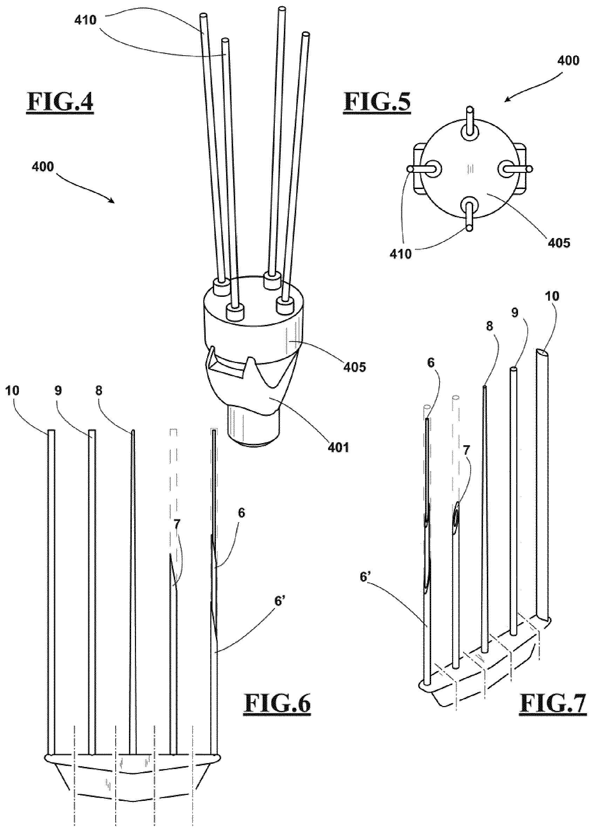

Figs. 4 and 5 show a diagrammatic perspective view, and a top plan view of a shaking device 400 according to still another exemplary embodiment of the invention. The support body 405 can oscillate with a rotational movement. Shaking device 400 comprises a holding rod 401 and a plurality of flexible sticks 410 each having one end connected to the support body 405.

Each flexible stick 110,210,308,410 of figures 1-4 has a first natural resonant frequency in the flexural oscillation mode allowed by the above constraint to support body 105,205, 315, 405. An alternated movement of a predetermined frequency of support bodies 105,205, 315, 405 can be caused by an actuation means comprising an actuation element and a prime motor, not shown, which actuates the respective actuation means. The alternated movement of support bodies 105,205, 315, 405 causes a corresponding integral alternated movement of flexible sticks 110,210,308,410, and causes the flexible sticks to vibrate amplifying the oscillation as discussed above.

In both devices 100,200 of Figs 1,2, an actuation means not shown in detail is arranged to cause a translational movement of flexible sticks 110,210. In other words, each flexible stick 110,210 can move along respective ideal planes substantially defined by the flexible stick 110,210 itself when at rest and by a predetermined linear oscillation direction.

In both devices 300,400, the actuation means is arranged to cause a conical or rotational movement of flexible sticks 308,410. In other words, each flexible stick 308,410 can move respectively about an axis defined substantially by the support 315, 405 axis, and about a predetermined oscillation rotational direction according to a conical movement.

As said above, according to the invention, the means for causing an alternated movement is configured such that the above alternated movement has a frequency that is set between **45%** and 98%, preferably between **60%** and 98%, or even between **75%** and 98%, of the first natural resonant frequency of flexible sticks 110,210,308,410.

Possible ranges of frequency for the oscillation movement of support bodies 105,205,315, 405 and of flexible sticks 110,210,308,410 are 60 to 85%, or **75%** to 85% or even 85% to 90% of the first natural resonant frequency of flexible sticks 110, 210, 308, 410 regardless the oscillation movement is a translational movement, like in shaking devices 100 and 200 (Figs. 1 and 2), or a rotational/conical movement, like in shaking devices 300,400 (Fig. 3 and 4).

A further optional specification is the elasticity modulus of the material with which flexible sticks 110,210,308,410 are made, along with the geometric features of flexible sticks themselves, e.g. the shape and the size of their cross section, to obtain a suitable moment of inertia.

Flexible sticks 110,210,308,410 may be made of any suitable, flexible material, such as a metal like steel, a polymeric material, carbon fibres, or even a glass fibres material. Preferably, the material of flexible sticks 110,210,308,410 is a resilient and high-toughness material.

In an embodiment, as shown in Figs. 6 and 7, two different materials are used to make flexible sticks 110, 210,308,410 which comprise a core portion 6 and a lining layer 6' formed about core portion 6, wherein the core portion 6 is made of a core material that has an elasticity modulus preferably higher than the elasticity modulus of the lining material of which lining layer 6' is made.

The shape of the cross section of flexible sticks 110,210,308,410 may be for instance circular o square, i.e. a shape that is symmetrical about a central axis, or even a substantially rectangular shape 10, in which the oscillation plane cuts the cross section parallel to the shortest side.

Still with reference to Figs. 6 and 7, in a possible embodiment of the invention, flexible sticks 8 can have a cross section that changes along the longitudinal direction of the flexible sticks, in particular the cross section can preferably be larger at the point where flexible stick 8 is connected with support body, and be smaller at the opposite portion, or tip portion.

In another embodiment, the flexible sticks 7 can have a hollow cross section.

Figs. 8 and 9 show shaking devices 100 and 500 according to respective exemplary embodiments, in which the support bodies 105 and the support body 505 comprises a means for transmitting, by means of the respective holding rod, a translational movement respectively to flexible sticks 110 and 510.

More in detail, the flexible sticks are shown in extreme respective positions of the translational movement. To this purpose, as shown for example in Fig. 9, support body 505 of the sticks is integral to an actuation element 515, that has a lower portion slidingly arranged within the rod. Actuation element 515 is longitudinally actuated according to an alternated movement between a contracted position 515' and an extended position 515".

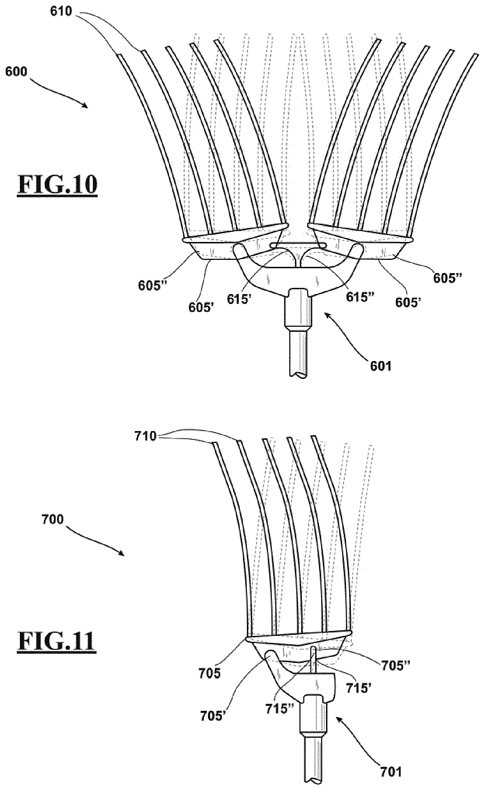

Figs. 10 and 11 show shaking devices 600 and 700 according to respective exemplary embodiments of the invention, in which the support bodies 605 and the support body 705, respectively, comprise/s a means for transmitting a circular movement to flexible sticks 610 and 710.

More in detail, the flexible sticks are shown in extreme respective positions. To this purpose, as shown for example in Fig. 11, holding rod 701 is pivotally constrained to the support body 705 of the sticks 710 at one own portion end 705', while the opposite end 705", or a portion intermediate between end portion 705',705" of support body 705 of the sticks 710, is arranged to be moved by a piston 715'-715" slidingly arranged within the rod. Piston 715'-715" is longitudinally actuated according to an alternated movement between a contracted position 715' and an extended position 715".

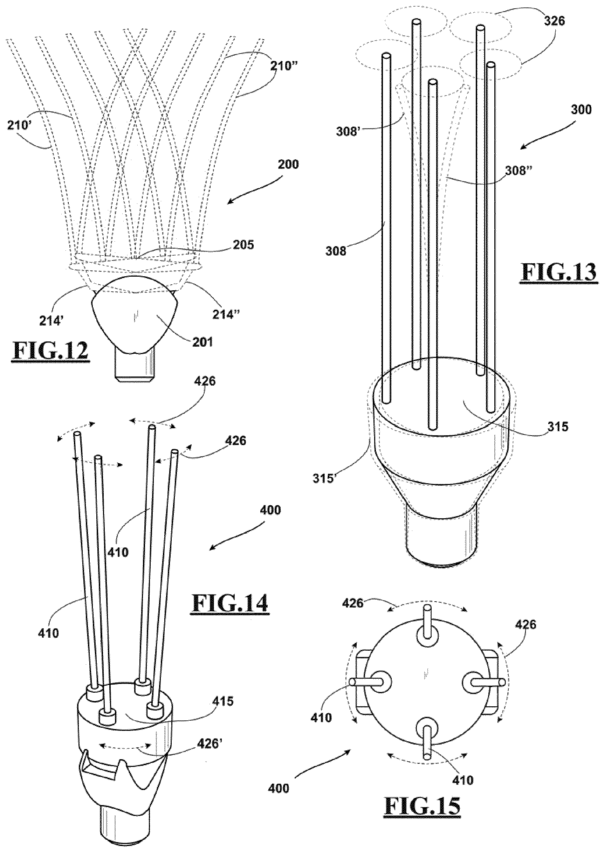

Fig. 12 shows a shaking device 200 wherein flexible sticks 210 are shown in extreme respective position 210',210" of their own rotational movement. To this purpose, holding rod 201 is integral to an actuation element adapted to rotationally actuate supports 205 of the sticks about the own axis. Actuation element is rotationally actuated according to an alternated oscillatory movement between two extreme portions 214',214". In shaking device 200, each flexible stick 210 can oscillate substantially along a plane orthogonal to the rotation axis of the supports 205 of the sticks.

Figs. 13 to 15 show two shaking devices according to respective embodiments of the invention, in which the actuation means of the flexible sticks is arranged to cause a rotational oscillation of the flexible sticks 308,410.

In particular, Fig. 13 shows shaking device 300 similar to that of Fig. 3, with flexible sticks 308. The movement of top end portion of each flexible stick 308 is shown as a dotted circle 326. Two radially opposite positions of one flexible stick 308 are also shown in dotted lines 308',308". In other words, the actuation means of device 300 exploits a continuous eccentric oscillation 315' transmitted by a motor to the support 315 of the sticks.

Figs. 14 and 15 show shaking devices 400 of Figs. 4 and 5. The rotational movement of top end portion of each flexible stick 410 is shown as an arc of circle 426, as well as the circular oscillation 426' of corresponding support bodies 415. The support body 415 is caused to oscillate by a respective actuation member of an actuation means, not shown. Flexible sticks 410 are mounted at an angle with respect to the longitudinal axis of the rod, which cooperates with the flexibility of the flexible sticks 410 to enhance the rotational oscillation.

Fig. 16 compares the alternated movement of a stiff stick having axis 60', of prior art, with a flexible stick 10'-10". During the movement, both of them would rotate integrally with support from 65'to 65" about the hinge of the support, indicated with a circle, but the former would alternately pass from position 60" to position 60"' and vice-versa, whereas the latter, due to its flexibility and due to a frequency of oscillation as above defined, would alternately pass from position 10' to position 10" and vice-versa. Therefore, the flexibility provided by the invention makes it possible to enhance the overall movement of the flexible stick to a distance 70',70" from the axis of the flexible stick when at rest. The length of a flexible stick is indicated by 55, while the distance between the base of the flexible stick and the rotation axis of the support body is indicated by 75.

In particular, the angle 66' formed by the tip of a flexible stick 10'-10" with respect to the axis when at rest is about three times corresponding angle 65' formed by a stiff stick of prior art, when the means for causing an alternated movement is configured to cause the alternated movement to have a frequency set between 45% and 98%, or within the preferred sub ranges above defined, of the first natural resonant frequency of the flexible sticks.

Concerning the actuation means, for determining the alternated movement of support body, it works like in a shaking device of prior art, but with a shorter oscillation amplitude. In fact, the flexible nature of the sticks, arranged as resonating members according to the invention, causes an amplification of oscillation, and the basic oscillation amplitude of the support body can be much lower than the shaking devices of prior art.

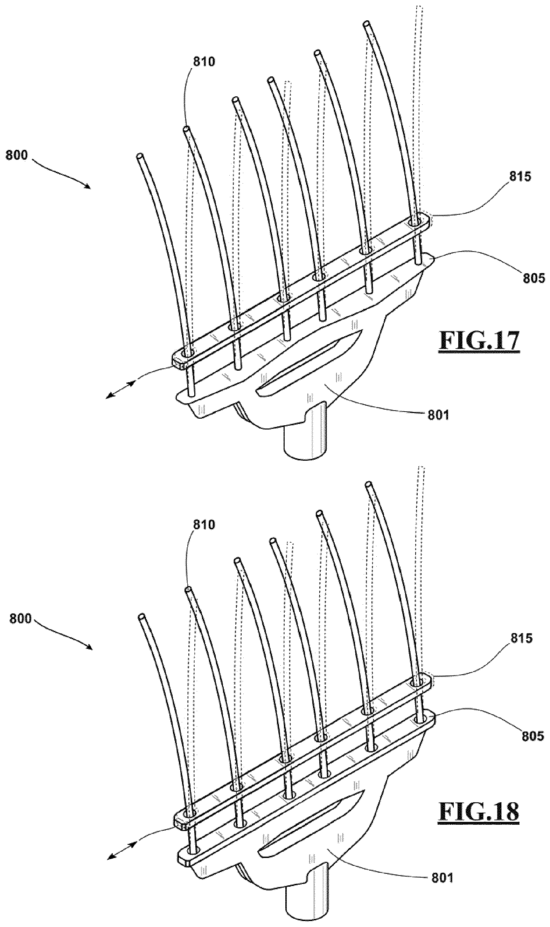

Fig. 17 is a diagrammatic perspective view of a shaking device according to still a further embodiment of the invention, showing an innovative movement in which the support 805 of the sticks 810 is rigidly connected to the holding rod 801. The sticks 810 are linked to the moving mean by a pivotally connection 815 placed near, for example 1/4 of their length, to their base end. The figure shows the enhanced oscillation amplitude and deformation of the sticks vibrating at a frequency proximate to the first natural frequency thereof, according to the invention.

Fig. 18 is a diagrammatic perspective view of a shaking device according to still a further embodiment of the invention showing an innovative movement in which the lower ends of the sticks 810 are not connected rigidly to the support 805 but rather pivotally and the sticks 810 are linked to the moving mean by a pivotally connection 815 placed near, i.e. 1/4 of their length, to their base end. The figure shows the deformation of the sticks 810 vibrating at a frequency proximate to the first natural frequency thereof.

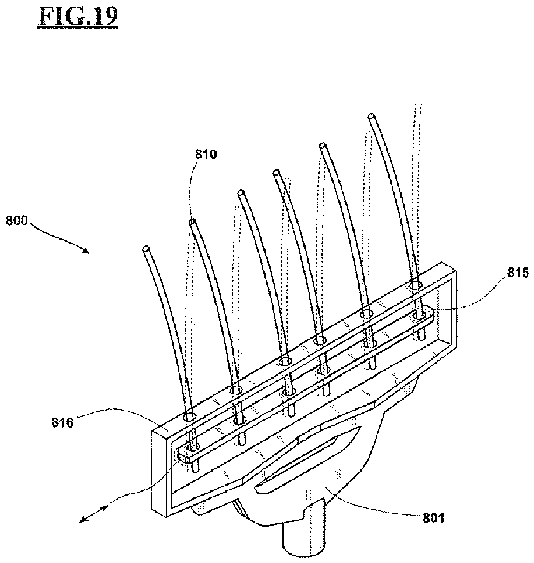

Fig. 19 is a diagrammatic perspective view of a shaking device according to still a further embodiment of the invention showing an innovative movement in which, differently from fig. 18, the lower ends of the sticks 810 are pivotally linked to the moving means by the pivotally connection 815, while the pivotal connection 816, placed for example at 1/4 of the sticks' length, is integral to holding rod 801.

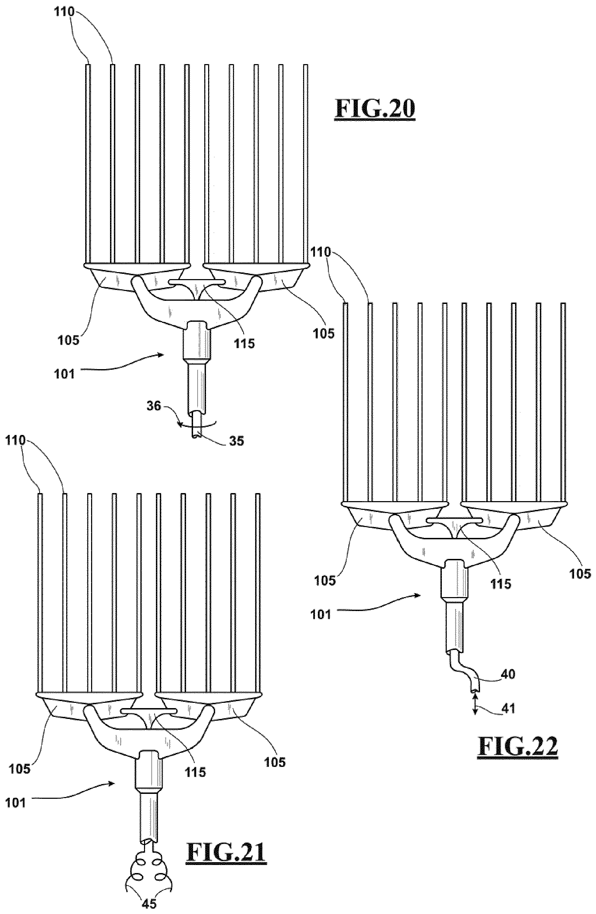

In figures 20-22, possible different actuating embodiments are shown.

Fig 20 shows shaking device 100 of Fig. 1, in which the actuation means is in turn actuated by the rotation of a drive shaft 35 co-axial to the holding rod.

Fig 21 shows shaking device 100 of Fig. 1, in which an electric actuation means 101 is provided with an electric connection means 45, in particular a couple of wires or of terminals.

Fig 22 shows shaking device 100 of Fig. 1, in which actuation means 101 is provided with a hydraulic or pneumatic connection means 40, in particular a conduit adapted to receive an actuation fluid 41 which may be a gas or a liquid such as actuation oil.

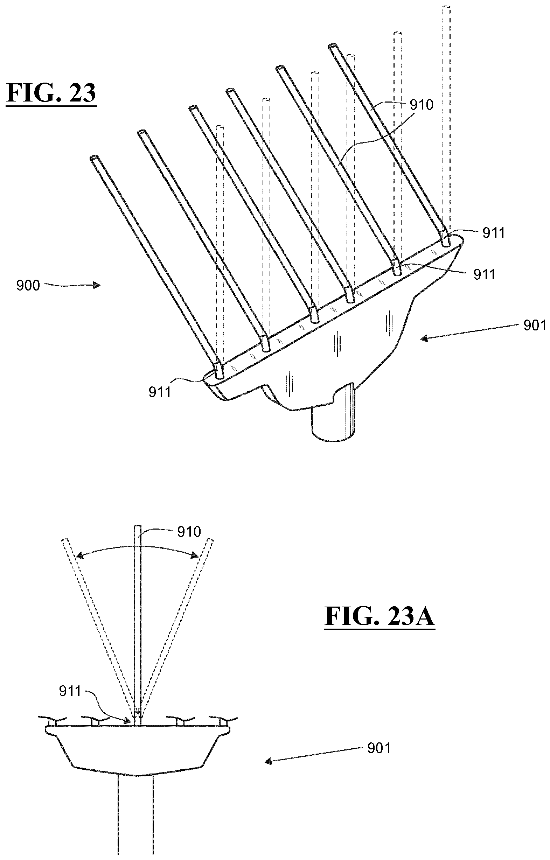

With reference to figures 23-25, which embodiments do not form part of the invention, the sticks can also be not completely flexible, but partially.

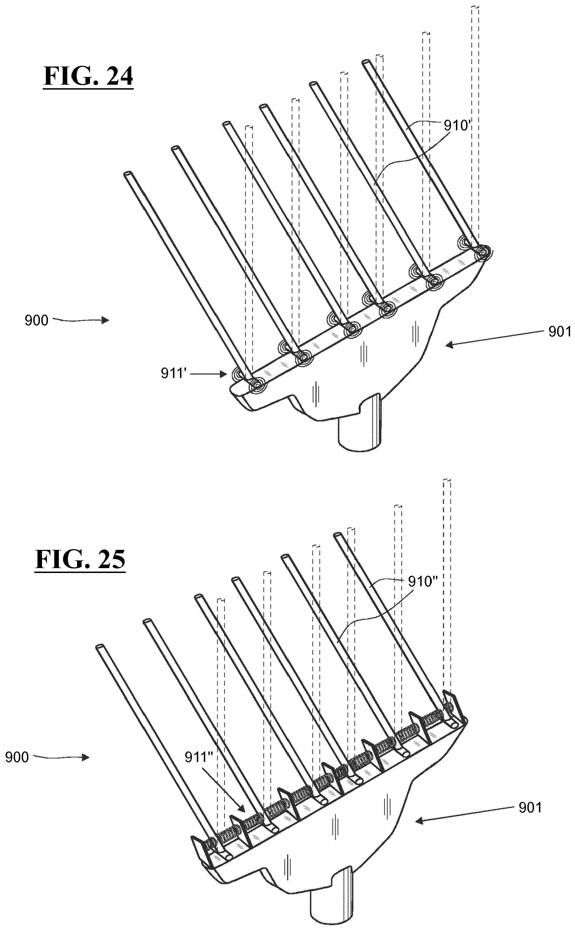

More precisely, the sticks can be made of a substantially stiff material and comprise a flexible root connected to said support body, which can be for example stiff stick having a root consisting of or comprising a coaxial spring, as shown in fig. 23, or can be made as stiff sticks that engage with an elastic portion of said support, as shown in figures 24 and 25, which can be a spring or an elastic part of the support, for example plastic material, composite material, rubber, silicone rubber, vulcanized rubber.

In particular, Fig. 23 is a diagrammatic perspective view of a shaking device in which the sticks 910 are partly rigid and each stick is connected to the support body 901 trough an elastic element 911 that allows the sticks to oscillate with a predetermined frequency and a enhanced amplitude

In fig. 23A the movement of such a stick is diagrammatically shown, with the deformation of the elastic root element connecting the stick with the support body. Analogously to fig. 16, the dashed lines show the enhanced amplitude of the sticks, which, thanks to the combination of an elastic portion, i.e. the root 911, and a stiff portion 910, behave together as a resonating member when the oscillation frequency of the support is within the ranges defined above with respect to the overall first natural frequency of the stiff/resilient system 910/911.

With reference to Fig. 24, still a further embodiment is shown in which the sticks are rigid and pivotally connected to the support body, and each stick provides at least a torsional spring that allows the stick to oscillate respect to the support body with a predetermined frequency and a predetermined amplitude. The same effect occurs as defined for figure 23A above.

In Fig. 25 the sticks are rigid and pivotally connected to the support body, and each stick provides at least a linear spring that allows the stick to oscillate respect to the support body with a predetermined frequency and a predetermined amplitude. Also here the same effect applies as defined for figure 23A above.

The springs of figure 24 or 25 can be real springs, or they are a diagrammatic representation of an elastic portion of the support, which can be made of an elastic material, in such a way that the sticks and the elastic portion of the support behave together as a resonating member, when the oscillation frequency of the support is within the ranges defined above with respect to the overall first natural frequency of the stiff/resilient system 910'/911' or 910"/911".

The foregoing description of specific exemplary embodiments of the device according to the invention, of a shaking device will so fully reveal the invention according to the conceptual point of view so that other, using the prior art, will be able to modify and/or to adapt for various applications these specific exemplary embodiments without further researches and without parting from the inventive concept, and it is therefore to be understood that such adaptation and changes will have to be considered as equivalent of the specific exemplary embodiments. The means and the material to provide the various functions described herein could have a different nature without, for this reason, departing from the scope of the invention. It is to be understood that the expressions or the terminology that is employed herein is for the purpose of description and not of limitation.

## Claims

1. A shaking device (100,200,300,400) for harvesting small fruit comprising:
- a holding rod (101,201,301,401);
- at least one support body (105,205,305,405) movably connected to said holding rod;
- a plurality of flexible sticks (110,210,308,410, 810) connected to said support body (105,205,305,405) ;
- an actuation means for causing an alternated movement to the or each support body with respect to said holding rod, said alternated movement causing a corresponding alternated movement to said flexible sticks (110,210,308,410,810), and said alternated movement having a predetermined frequency and a predetermined amplitude;
**characterised in that**
said flexible sticks (110,210,308,410,810) are arranged as resonating members having a predetermined first natural resonant frequency;
**and** said actuation means is configured to cause said alternated movement to have a frequency set between 45% and 98% of said first natural resonant frequency of said sticks, in order to cause said flexible sticks to oscillate at an enhanced amplitude that is at least 1,5 to 10 times larger than the amplitude of the oscillation received from said actuation means.

2. A shaking device (100,200,300,400,800) for harvesting small fruit according to claim 1, wherein said frequency of said alternated movement is set between 60% and 98%, in particular 75 and 98% of said first natural resonant frequency of said flexible sticks (110,210,308,410, 810.

3. A shaking device for harvesting small fruit according to claim 1, wherein said sticks are arranged as resonating members having a predetermined first natural resonant frequency by making at least a portion of said sticks of a flexible material having a predetermined elasticity modulus and a cross section with a predetermined moment of inertia, such that by setting said predetermined frequency of said alternated movement between 500 and 2000 cycles per minute, preferably between 800 and 1200 cycles per minute, or between 1000 and 1600 cycles per minute, they vibrate with said enhanced amplitude.

4. A shaking device (100,200,300,400,800) for harvesting small fruit according to claim 1, wherein, said actuation means comprises a frequency adjustment means configured in such a way that by adjusting said frequency the enhanced amplitude of the oscillations of the sticks is between 1,5 to 10 times larger than the amplitude of the oscillation received from said actuation means, and consequently the harvesting power of the shaking device is adjusted.

5. A shaking device for harvesting small fruit according to claim 1, wherein said sticks (110,210,308,410,810) have a cross section selected from the group consisting of:
- substantially circular cross section
- substantially rectangular cross section
- substantially rectangular cross section with thickness lower in a support oscillation plane and thickness higher a plane orthogonal to the support oscillation plane

6. A shaking device for harvesting small fruit according to claim 1, wherein said sticks are made of a high resilience and high-toughness material, in particular selected from the group consisting of: glass fibres, carbon fibres, steel, polymeric material.

7. A shaking device for harvesting small fruit according to claim 1, wherein said sticks comprise a core made of a first material and an external lining arranged about said core made of a second material, preferably the first material has a higher elasticity modulus than the second material.

8. A shaking device for harvesting small fruit according to claim 1, wherein said sticks have a variable cross section, in particular said cross section is larger at a root region of said stick and is smaller at said free end.

9. A shaking device for harvesting small fruit according to claim 1, wherein said sticks have a hollow cross section.

10. A shaking device according to claim 1, wherein a single support body is provided movably mounted to the holding rod and holding said sticks.

11. A shaking device according to claim 1, wherein two support bodies are provided movably mounted to the holding rod and oscillating in a same direction or in opposite directions.

12. A shaking device according to claim 1, wherein the support body comprises a movable part and a fixed part, to which the sticks are fixed, the movable part engaging the sticks at a distance from the fixed part in order to cause the sticks to oscillate, in particular
the fixed part is bridge-shaped and the movable part is arranged between the fixed part and the rod, wherein said sticks have an extending portion between the fixed part and the rod, in such a way that the movable part engages such extending portion and cause the whole sticks to vibrate.

13. A shaking device (600, 700) for harvesting small fruit according to claim 1, wherein said support body is pivotally constrained to said holding rod and rotates about an axis.

14. A shaking device (300,400) for harvesting small fruit according to claim 1, wherein said support body comprises a means for transmitting a circular or conical oscillation to said sticks (308,410).

15. A shaking device (100, 500) for harvesting small fruit according to one or more of the preceding claims, wherein said support body is slidably constrained to said holding rod.

## Patentansprüche

1. Eine Schüttelvorrichtung (100,200,300,400) zum Ernten kleiner Früchte, mit:
- einer Haltestange (101,201,301,401),
- zumindest einem Tragkörper (105,205,305,405), der beweglich mit der Haltestange verbunden ist,
- einer Vielzahl von flexiblen Stäben (110,210,308,410,810), die mit dem Tragkörper (105,205,305,405) verbunden sind,
- einem Betätigungsmittel zum Bewirken einer alternierenden Bewegung zu dem oder jedem Tragkörper bezüglich der Haltestange, wobei die alternierende Bewegung eine entsprechende alternierende Bewegung zu den flexiblen Stäben (110,210,308,410,810) bewirkt, und wobei die alternierende Bewegung eine vorbestimmte Frequenz und eine vorbestimmte Amplitude hat,
**dadurch gekennzeichnet, dass**
die flexiblen Stäbe (110,210,308,410,810) als Resonanzelemente mit einer vorbestimmten ersten Eigenresonanzfrequenz angeordnet sind,
und das Betätigungsmittel konfiguriert ist, um die alternierende Bewegung mit einer Frequenz zu bewirken, die zwischen 45% und 98% der ersten Eigenresonanzfrequenz der Stäbe eingestellt ist, um zu bewirken, dass die flexiblen Stäbe bei einer verstärkten Amplitude schwingen, die zumindest 1,5 bis 10 Mal größer ist als die Amplitude der Schwingung, die von dem Betätigungsmittel erhalten wird.

2. Eine Schüttelvorrichtung (100,200,300,400,800) zum Ernten kleiner Früchte gemäß Anspruch 1, wobei die Frequenz der alternierenden Bewegung auf zwischen 60% und 98%, insbesondere 75 und 98% der ersten Eigenresonanzfrequenz der flexiblen Stäbe (110,210,308,410,810) eingestellt ist.

3. Eine Schüttelvorrichtung zum Ernten kleiner Früchte gemäß Anspruch 1, wobei die Stäbe als Resonanzelemente mit einer vorbestimmten ersten Eigenresonanzfrequenz angeordnet sind, indem zumindest ein Abschnitt der Stäbe aus einem flexiblen Material mit einem vorbestimmten Elastizitätsmodul und einem Querschnitt mit einem vorbestimmten Trägheitsmoment hergestellt sind, derart, dass durch Einstellen der vorbestimmten Frequenz der alternierenden Bewegung zwischen 500 und 2000 Zyklen pro Minute, vorzugsweise zwischen 800 und 1200 Zyklen pro Minute oder zwischen 1000 und 1600 Zyklen pro Minute, diese mit der verstärkten Amplitude vibrieren.

4. Eine Schüttelvorrichtung (100,200,300,400,800) zum Ernten kleiner Früchte gemäß Anspruch 1, wobei das Betätigungsmittel ein Frequenzeinstellmittel aufweist, das so konfiguriert ist, dass durch Einstellen der Frequenz die verstärkte Amplitude der Schwingungen der Stäbe zwischen 1,5 bis 10 Mal größer ist als die Amplitude der Schwingung, die von dem Betätigungsmittel erhalten wird, und in Folge die Ernteleistung der Schüttelvorrichtung eingestellt ist.

5. Eine Schüttelvorrichtung zum Ernten kleiner Früchte gemäß Anspruch 1, wobei die Stäbe (110,210,308,410,810) einen Querschnitt haben, der aus der Gruppe ausgewählt ist, die besteht aus:
- ein im Wesentlichen kreisförmiger Querschnitt,
- ein im Wesentlichen rechteckiger Querschnitt,
- ein im Wesentlichen rechteckiger Querschnitt mit einer Dicke, die kleiner ist in einer Trag-Schwingungsebene und einer Dicke, die größer ist in einer Ebene orthogonal zu der Trag-Schwingungsebene.

6. Eine Schüttelvorrichtung zum Ernten kleiner Früchte gemäß Anspruch 1, wobei die Stäbe aus einem hochelastischen und hochfesten Material hergestellt sind, insbesondere ausgewählt aus der Gruppe bestehend aus: Glasfasern, Carbonfasern, Stahl, Polymermaterial.

7. Eine Schüttelvorrichtung zum Ernten kleiner Früchte gemäß Anspruch 1, wobei die Stäbe einen Kern aufweisen, der hergestellt ist aus einem ersten Material und einer externen Umkleidung, die um den Kern herum angeordnet ist, die aus einem zweiten Material hergestellt ist, wobei das erste Material vorzugsweise ein höheres Elastizitätsmodul besitzt als das zweite Material.

8. Eine Schüttelvorrichtung zum Ernten kleiner Früchte gemäß Anspruch 1, wobei die Stäbe einen variablen Querschnitt haben, wobei insbesondere der Querschnitt an einem Fußbereich des Stabs größer ist und an dem freien Ende kleiner ist.

9. Eine Schüttelvorrichtung zum Ernten kleiner Früchte gemäß Anspruch 1, wobei die Stäbe einen hohlen Querschnitt besitzen.

10. Eine Schüttelvorrichtung gemäß Anspruch 1, wobei ein einzelner Tragkörper bewegbar an der Haltestange angebracht und die Stäbe haltend vorgesehen ist.

11. Eine Schüttelvorrichtung gemäß Anspruch 1, wobei zwei Tragkörper bewegbar an der Haltestange angebracht und in einer selben Richtung oder in entgegengesetzten Richtungen schwingend vorgesehen sind.

12. Eine Schüttelvorrichtung gemäß Anspruch 1, wobei der Tragkörper ein bewegliches Teil und ein feststehendes Teil besitzt, an dem die Stäbe befestigt sind, wobei das bewegliche Teil mit den Stäben in einer Distanz von dem feststehenden Teil in Eingriff ist, um das Schwingen der Stäbe zu bewirken, wobei das feststehende Teil insbesondere brückenförmig ist und das bewegliche Teil zwischen dem feststehenden Teil und der Stange angeordnet ist, wobei die Stäbe einen sich zwischen dem feststehenden Teil und der Stange erstreckenden Abschnitt haben, in solcher Weise, dass das bewegliche Teil mit dem sich erstreckenden Abschnitt in Eingriff ist und das Vibrieren der gesamten Stäbe bewirkt.

13. Eine Schüttelvorrichtung (600,700) zum Ernten kleiner Früchte gemäß Anspruch 1, wobei der Tragkörper gelenkig an der Haltestange festgelegt ist und um eine Achse rotiert.

14. Eine Schüttelvorrichtung (300,400) zum Ernten kleiner Früchte gemäß Anspruch 1, wobei der Tragkörper ein Mittel zum Übertragen einer kreisförmigen oder konischen Schwingung auf die Stäbe (308,410) aufweist.

15. Eine Schüttelvorrichtung (100,500) zum Ernten kleiner Früchte gemäß einem oder mehreren der vorstehenden Ansprüche, wobei der Tragkörper verschiebbar an der Haltestange festgelegt ist.

## Revendications

1. Agitateur (100, 200, 300, 400) pour la récolte de petits fruits, comprenant :
- une tige de maintien (101, 201, 301, 401) ;
- au moins un corps de support (105, 205, 305, 405) raccordé de façon mobile à ladite tige de maintien ;
- une pluralité de bâtonnets souples (110, 210, 308, 410, 810) raccordés audit corps de support (105, 205, 305, 405) ;
- un dispositif d'actionnement pour donner lieu à un mouvement alterné du ou de chaque corps de support, ledit mouvement alterné engendrant un mouvement alterné correspondant desdits bâtonnets souples (110, 210, 308, 410, 810), et ledit mouvement alterné ayant une fréquence prédéterminée et une amplitude prédéterminée ;
**caractérisé en ce que** lesdits bâtonnets souples (110, 210, 308, 410, 810) sont agencés comme des éléments résonants ayant une première fréquence résonante naturelle prédéterminée ; **et**
ledit dispositif d'actionnement étant configuré pour donner au mouvement alterné une fréquence réglée entre 45% et 98% de ladite première fréquence résonante naturelle desdits bâtonnets, de sorte que lesdits bâtonnets souples oscillent à une amplitude renforcée de 1,5 à 10 fois plus grande que l'amplitude de l'oscillation reçue dudit dispositif d'actionnement.

2. Agitateur (100, 200, 300, 400, 800) pour la récolte de petits fruits selon la revendication 1, ladite fréquence dudit mouvement alterné étant comprise entre 60% et 98%, en particulier entre 75 et 98% de ladite première fréquence résonante naturelle desdits bâtonnets souples (110, 210, 308, 410, 810).

3. Agitateur pour la récolte de petits fruits selon la revendication 1, lesdits bâtonnets étant agencés comme des éléments résonants ayant une première fréquence résonante naturelle prédéterminée en réalisant au moins une partie desdits bâtonnets avec un matériau flexible présentant un module d'élasticité prédéterminé et une section transversale avec un moment d'inertie prédéterminé, de sorte qu'en réglant ladite fréquence prédéterminée dudit mouvement alterné entre 500 et 2000 cycles par minute, de préférence entre 800 et 1200 cycles par minute, ou entre 1 000 et 1 600 cycles par minute, ils vibrent avec ladite amplitude renforcée.

4. Agitateur (100, 200, 300, 400, 800) pour la récolte de petits fruits selon la revendication 1, ledit dispositif d'actionnement comprenant un dispositif d'ajustement de la fréquence configuré de telle façon qu'en ajustant ladite fréquence l'amplitude renforcée des oscillations des bâtonnets est de 1,5 à 10 fois plus grande que l'amplitude de l'oscillation reçue dudit dispositif d'actionnement, et, en conséquence, la puissance de récolte de l'agitateur est ajustée.

5. Agitateur pour la récolte de petits fruits selon la revendication 1, lesdits bâtonnets (110, 210, 308, 410, 810) ont une section transversale sélectionnée dans le groupe composé :
- d'une section transversale substantiellement circulaire
- d'une section transversale substantiellement rectangulaire
- d'une section transversale substantiellement rectangulaire avec une épaisseur inférieure dans un plan d'oscillation du support, et une épaisseur supérieure dans un plan perpendiculaire au plan d'oscillation du support.

6. Agitateur pour la récolte de petits fruits selon la revendication 1, lesdits bâtonnets étant réalisés avec un matériau à résilience élevée et haute résistance, sélectionné notamment dans le groupe composé de : fibres de verre, fibres de carbone, acier, matériau polymère.

7. Agitateur pour la récolte de petits fruits selon la revendication 1, lesdits bâtonnets comprenant un noyau réalisé avec un premier matériau, et une garniture externe agencée autour dudit noyau, réalisée avec un deuxième matériau, le module d'élasticité du premier matériau étant de préférence supérieur à celui du deuxième matériau.

8. Agitateur pour la récolte de petits fruits selon la revendication 1, lesdits bâtonnets présentant une section transversale variable, en particulier ladite section transversale étant plus grande dans une zone de la racine dudit bâtonnet et plus petite dans ledit bout libre.

9. Agitateur pour la récolte de petits fruits selon la revendication 1, lesdits bâtonnets possédant une section transversale creuse.

10. Agitateur pour la récolte de petits fruits selon la revendication 1, comprenant un corps de support unique monté de façon amovible sur la tige de maintien, et maintenant lesdits bâtonnets.

11. Agitateur pour la récolte de petits fruits selon la revendication 1, comprenant deux corps de support montés de façon amovible sur la tige de maintien, et oscillant dans une même direction ou dans des directions opposées.

12. Agitateur pour la récolte de petits fruits selon la revendication 1, le corps de support comprenant une partie mobile et une partie fixe, sur lesquelles sont fixés les bâtonnets, la partie mobile engageant les bâtonnets à une distance de la partie fixe, afin de donner lieu à l'oscillation des bâtonnets ; en particulier, la partie fixe étant en forme de pontet, et la partie mobile étant agencée entre la partie fixe et la tige, lesdits bâtonnets possédant une partie d'extension entre la partie fixe et la tige, de sorte que la partie mobile engage ladite partie d'extension, et donne lieu à la vibration des bâtonnets entiers.

13. Agitateur (600, 700) pour la récolte de petits fruits selon la revendication 1, ledit corps de support étant contraint de façon pivotante sur ladite tige de maintien, et tournant autour d'un axe.

14. Agitateur (300, 400) pour la récolte de petits fruits selon la revendication 1, ledit corps de support comprenant un dispositif pour la transmission d'une oscillation circulaire ou conique auxdits bâtonnets (308, 410).

15. Agitateur (100, 500) pour la récolte de petits fruits selon une ou plusieurs des revendications précédentes, ledit corps de support étant contraint par coulissement sur ladite tige de maintien.
